# EUROPÄISCHE PATENTSCHRIFT

(11) **EP 0 346 687 B1**
(45) Veröffentlichungstag und Bekanntmachung des Hinweises auf die Patenterteilung: **04.08.1993**
(21) Anmeldenummer: 89109864.2
(22) Anmeldetag: 31.05.1989
(51) Int. Cl.: G01S 15/10, G01S 7/52

(54) **Verfahren zur Störunterdrückung bei Ultraschall-Abstandsmessungen**
Method of suppressing interference in ultrasonic distance measurement
Procédé pour supprimer les parasites dans la mesure de distance à ultrasons

(30) Priorität: 13.06.1988 DE 3820103
(43) Veröffentlichungstag der Anmeldung: 20.12.1989
(73) Patentinhaber: SIEMENS AKTIENGESELLSCHAFT, 80333 München (DE)
(72) Erfinder: Forster, Alfred, Dipl.-Ing. (FH), D-8460 Schwandorf (DE); Schorner, Gerd, Dipl.-Ing. (FH), D-8450 Amberg (DE)

(56) Entgegenhaltungen:
- EP-A- 0 174 090
- FR-A- 2 568 687
- GB-A- 2 129 935
- US-A- 4 596 144
- ULTRASONICS, Band 11, Nr. 4, Juli 1973, Seiten 165-173, Guilford, Surrey, GB; S. LEES et al.: "DONAR: a computer processing system to extend ultrasonic pulse-echo testing"

## Beschreibung

Die Erfindung bezieht sich auf ein Verfahren zur Unterdrükkung von stochastischen Störsignalen bei der Abstandsmessung mit einer aus einem Ultraschall-Näherungsinitiator und einer Steuer- und Auswerteeinheit bestehenden Einheit, wobei der Ultraschall-Näherungsinitiator wiederholt Ultraschall-Impulse gleicher Breite aussendet und dazugehörige Echosignal empfängt, die in der Steuer- und Auswerteeinheit ausgewertet werden, wobei stochastische, auf Störsignale hinweisende Abweichungen des Echosignals gegenüber dem ausgesendeten Ultraschall-Impuls in der Abstandsermittlung berücksichtigt werden.

Verfahren zur Störunterdrückung der genannten Art sind z.B. aus der DE 34 28 773 bekannt. Hier wird die Pulsbreitenauswertung beschrieben, bei der Fehlimpulse ausgesondert werden. Fehlimpulse werden daran erkannt, daß sie breiter oder schmaler sind als die gesendeten Ultraschall-Impulse, die sämtlich gleich breit sind. Mit dieser Methode können zwar Fehlauslösungen eingeschränkt werden, doch besteht hierbei der Nachteil, daß nur sehr grob ausgewertet wird, ob das Echosignal störbehaftet ist oder nicht. Der durch die Amplitude des Echosignals gegebene Informationsgehalt bleibt dagegen unberücksichtigt.

Der Erfindung liegt die Aufgabe zugrunde, ein verbessertes Verfahren zur Unterdrückung der bei Abstandsmessungen mittels eines Ultraschall-Näherungsinitiators auftretenden stochastischen Störsignale zu schaffen, um fehlerhafte Meldungen und/oder Schalthandlungen zu vermeiden.

Dies wird auf einfache Weise bei einem Verfahren der obengenannten Art dadurch erreicht, daß das am Ausgang des Ultraschall-Näherungsinitiators anstehende, analoge Echosignal in Form eines Puls-Wellenbündels vor Zuführung zur Steuer- und Auswerteeinheit zwischenverarbeitet wird, indem das Echosignal zu bestimmten, für jedes Puls-Wellenbündel gleichen Zeitpunkten abgetastet wird und danach die abgetasteten Analogwerte in Digitalwerte umgewandelt werden und daß diese digitalen Abtastwerte dann mit den für äquivalente Zeitpunkte aus den vorherigen Echosignalen ermittelten und abgespeicherten Digitalwerten mathematisch/logisch zu neuen Digitalwerten verknüpft werden, wobei die sich zeitlich entsprechenden digitalen Abtastwerte und die gespeicherten Digitalwerte in gewünschter Höhe gewichtet werden und daß darauf die neuen Digitalwerte anstelle der zuletzt gespeicherten Digitalwerte abgespeichert werden und außerdem der Steuer- und Auswerteeinheit zur weiteren Auswertung hinsichtlich Amplitude und/oder Pulsbreite zugeleitet werden. Erfolgt die mathematisch/logische Verknüpfung der gewichteten, digitalen Abtastwerte mit den für das vorherige Puls-Wellenbündel abgespeicherten und gewichteten Digitalwerte durch Mittelwertbildung zu neuen Digitalwerten, so stellt dies eine besonders einfache, leicht zu realisierende Verknüpfung dar. Es ist vorteilhaft, wenn jedes Echosignal in zeitlich äquidistanten Abständen abgetastet wird, weil hierdurch die Abtastung zu gleichen Zeitpunkten jedes Puls-Wellenbündels mit geringem Aufwand erreicht wird.

Die technischen Mittel zur Durchführung des obengenannten Verfahrens bestehen darin, daß zwischen dem Ausgang des Ultraschall-Näherungsinitiators und der Steuer- und Auswerteeinheit eine Zwischenverarbeitungseinheit geschaltet ist, bestehend aus einer Abtasteinrichtung, einem Analog-Digital-Wandler, einem Prozessor, einem Datenspeicher und einem Programmspeicher, wobei der Analog-Digital-Wandler zwischen den Ausgang und den Prozessor geschaltet ist, der sowohl mit dem Programmspeicher, dem Datenspeicher und der Steuer- und Auswerteeinheit elektrisch verbunden ist.

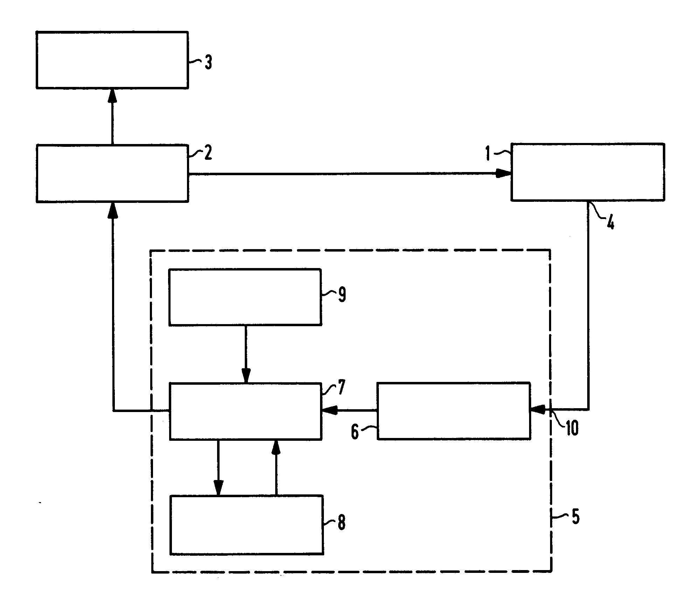

Anhand der Zeichnung wird ein Ausführungsbeispiel gemäß der Erfindung beschrieben.

Die Zeichnung zeigt das Blockschaltbild mit der Einrichtung zur Ultraschall-Abstandsmessung.

Die Einrichtung zur Ultraschall-Abstandsmessung, besteht aus einem Ultraschall-Näherungsinitiator 1, einer Steuer- und Auswerteeinheit 2, einer Anzeigeeinheit 3 und einer Zwischenverarbeitungseinheit 5, die zwischen den Ultraschall-Näherungsinitiator 1 und die Steuer- und Auswerteeinheit 2 geschaltet ist. Die Zwischenverarbeitungseinheit 5 ist aus einem Analog-Digital-Wandler 6 mit integrierter Abtasteinrichtung, einem Prozessor 7, einem Datenspeicher 8 und einem Programmspeicher 9 zusammengesetzt. Der Analog-Digital-Wandler 6 liegt am Eingang 10 der Zwischenverarbeitungseinheit 5 und ist ausgangsseitig mit dem Prozessor 7 verbunden, dessen Ausgang wiederum an die Steuer- und Auswerteeinheit 2 angeschlossen ist. Der Datenspeicher 8 und der Programmspeicher 9 stehen mit dem Prozessor 7 elektrisch in Verbindung. Aufgrund der Steuerung durch die Steuer- und Auswerteeinheit 2 sendet der Ultraschall-Näherungsinitiator 1 zyklisch Ultraschall-Impulse gleicher Breite aus und empfängt dazugehörige Echosignale. Das am Ausgang 4 des Ultraschall-Näherungsinitiators 1 anstehende analoge Signal wird von dem Moment ab abgetastet, in dem die Aussendung des Ultraschall-Impulses beendet ist. Die Abtastung erfolgt bis zum Zeitpunkt, in dem die Aussendung des nächsten Ultraschall-Impulses beginnt. Die Abtastung erfolgt in gleichen Zeitabständen. Die abgetasteten Analogwerte werden im Analog-Digital-Wandler 6 digitalisiert und an den Prozessor 7 weitergeleitet. Über den Prozessor 7 werden diese digitalisierten Abtastwerte mit den zeitäquivalenten Digitalwerten, die im Datenspeicher 8 gespeichert sind, mathematisch/logisch verknüpft. Die Zeitabstände zwischen den Abtastungen sind abhängig von der gewählten mathematisch/logischen Verknüpfungsart und von den die Verknüpfung ausführenden Bauelementen. Für einfache Verknüpfungen lassen sich Zeitabstände unter z.B. 30 - 50 us erreichen. In dem Programmspeicher 9 ist ein Programm abgelegt, welches die im Prozessor 7 auszuführende Verknüpfung steuert. Im einfachsten Fall werden die entsprechenden Digitalwerte durch eine Mittelwertbildung miteinander verknüpft, wobei die im Datenspeicher 8 gespeicherten Digitalwerte verschieden von den letzten digitalen Abtastwerten gewichtet werden können. Hierzu sei folgendes Beispiel gegeben: Der letzte digitale Abtastwert beträgt z.B. 1 und der entsprechende abgespeicherte Digitalwert z.B. 3. Beträgt dann z.B. der Wichtungsfaktor für die abgespeicherten Digitalwerte 4 und für die zuletzt abgetasteten Werte 1, so ergibt sich hieraus durch Mittelwertbildung ein neuer Wert 2.6. Die so ermittelten Digitalwerte werden anstelle der abgespeicherten Digitalwerte für entsprechende Zeitpunkte im Datenspeicher 8 abgelegt. Außerdem werden die neuen Digitalwerte von dem Prozessor 7 aus an die Steuer- und Auswerteeinheit 2 weitergeleitet. Hier werden die Digitalwerte ausgewertet, wobei der zu messende Objektabstand wie in üblicher Weise aus dem zeitlichen Abstand zwischen der Aussendung des Ultraschallimpulses und dem Empfang des zugehörigen Echosignals ermittelt wird. Zum Erkennen des Echosignals wird die bekannte Pulsbreitenauswertung vorgenommen. Darüber hinaus wird in dem erfindungsgemäßen Verfahren aber auch die Amplitude der Digitalwerte ausgewertet. Hierbei wird ein Grenzwert vorgegeben, der möglichst hoch aber unterhalb der für das Echosignal gelieferten Amplitude liegt. Es werden nur die oberhalb des Grenzwertes liegenden Impulse ausgewertet und unterhalb des Grenzwertes liegende Impulse, z.B. stochastische Störsignale, unterdrückt. Auf diese Weise läßt sich das Echosignal und damit der Objektabstand mit höherer Störsicherheit ermitteln.

Zur Ermittlung des folgenden Abstandswertes wird unter Zugrundelegung des folgenden Echosignals in der zuvor beschriebenen Weise verfahren. Der ermittelte Abstandswert kann auf einer Anzeigeeinheit 3, die an der Steuer- und Auswerteeinheit 2 angeschlossen ist, angezeigt werden. Es ist auch möglich, einen der Steuer- und Anzeigeeinheit 2 nachgeschalteten elektronischen Schalter bei einer bestimmten Abstandsüber- oder -unterschreitung schalten zu lassen.

## Patentansprüche

1. Verfahren Zur Unterdrückung von stochastischen Störsignalen bei der Abstandsmessung mit einer aus einem Ultraschall-Näherungsinitiator (1) und einer Steuer- und Auswerteeinheit (2) bestehenden Einrichtung (3), wobei der Ultraschall-Näherungsinitiator (1) wiederholt Ultraschall-Impulse gleicher Breite aussendet und dazugehörige Echosignale (Puls-Wellenbündel) empfängt, die in der Steuer- und Auswerteeinheit (2) ausgewertet werden, wobei stochastische, auf Störsignale hinweisende Abweichungen des Echosignals gegenüber dem ausgesendeten Ultraschall-Impuls in der Abstandsermittlung berücksichtigt werden, **dadurch gekennzeichnet,** daß das am Ausgang (4) des Ultraschall-Näherungsinitiators (1) anstehende, analoge Echosignal in Form eines Puls-Wellenbündels vor Zuführung zur Steuer- und Auswerteeinheit (2) zwischenverarbeitet wird, indem das Echosignal zu bestimmten, für jedes Puls-Wellenbündel gleichen Zeitpunkten abgetastet wird und danach die abgetasteten Analogwerte in Digitalwerte umgewandelt werden und daß diese digitalen Abtastwerte dann mit den für äquivalente Zeitpunkte aus den vorherigen Echosignalen ermittelten und abgespeicherten Digitalwerten mathematisch/logisch zu neuen Digitalwerten verknüpft werden, wobei die sich zeitlich entsprechenden digitalen Abtastwerte und die gespeicherten Digitalwerte in gewünschter Höhe gewichtet werden und daß darauf die neuen Digitalwerte anstelle der zuletzt gespeicherten Digitalwerte abgespeichert werden und außerdem der Steuer- und Auswerteeinheit (2) zur weiteren Auswertung hinsichtlich Amplitude und/oder Pulsbreite zugeleitet werden.

2. Verfahren nach Anspruch 1, **dadurch gekennzeichnet,** daß die mathematisch/logische Verknüpfung der gewichteten, digitalen Abtastwerte mit den für das vorherige Puls-Wellenbündel abgespeicherten und gewichteten Digitalwerte durch Mittelwertbildung zu neuen Digitalwerten erfolgt, indem die jeweils zuletzt erhaltenen digitalen Abtastwerte mit einem ersten Wichtungsfaktor multipliziert werden und die bereits abgespeicherten Digitalwerte mit einem zweiten Wichtungsfaktor multipliziert werden und die Summe beider Produkte durch die Summe der Wichtungsfaktoren dividiert wird.

3. Verfahren nach Anspruch 1 oder 2, **dadurch gekennzeichnet,** daß jedes Echosignal in zeitlich äquidistanten Abständen abgetastet wird.

4. Verfahren nach einem der vorhergehenden Ansprüche, **dadurch gekennzeichnet,** daß die zeitlich äquidistante Abtastung jedes Echosignals am Ende der Sendezeit für jedes vom Ultraschall-Näherungsinitiator (1) ausgesendeten Puls-Wellenbündels beginnt.

5. Einrichtung zur Durchführung des Verfahrens nach einem der Ansprüche 1 bis 4, **gekennzeichnet durch** eine Zwischenverarbeitungseinheit (5), die zwischen den Ausgang (4) eines Ultraschall-Näherungsinitiators (1) und eine Steuer- und Auswerteeinheit (2) geschaltet ist und die eine Abtasteinrichtung zur Abtastung des vom Näherungsinitiator empfangenen Echosignals, einen Analog-Digitalwandler (6) zur Umwandlung der abgetasteten Analogwerte des Echosignals in Digitalwerte, einen Datenspeicher (8) zur Abspeicherung der der Digitalwerte, einen Prozessor (7) und einen Programmspeicher (9) zur Ablage eines Programms, welches zur Steuerung einer mathematisch-logischen Verknüpfung im Prozessor (7) dient, aufweist, wobei der Analog-Digital-Wandler (6) zwischen den Ausgang (4) und den Prozessor (7) geschaltet ist, der sowohl mit dem Programmspeicher (9), dem Datenspeicher (8) und der Steuer- und Auswerteeinheit (2) elektrisch verbunden ist.

## Claims

1. Method for suppressing stochastic interference signals in the case of distance measurement with a device (3) which consists of an ultrasonic proximity initiator (1) and a control and evaluating device (2), with the ultrasonic proximity initiator (1) repeatedly emitting ultrasonic pulses of equal width and receiving pertinent echo signals (pulse wave packet) which are evaluated in the control and evaluating device (2), with stochastic deviations of the echo signal compared with the emitted ultrasonic pulse, which deviations point to interference signals, being taken into consideration in the distance determination, characterised in that the analog echo signal, which occurs at the output (4) of the ultrasonic proximity initiator (1) in the form of a pulse wave packet, undergoes intermediate processing before supply to the control and evaluating device (2) with the echo signal being sampled at certain instants which are equal for each pulse wave packet and thereupon the sampled analog values being converted into digital values and in that these digital sample values are then mathematically/logically combined with the digital values, determined and stored for equivalent instants from the previous echo signals, to give new digital values, with the temporally corresponding digital sample values and the stored digital values being weighted to a desired level, and in that thereupon the new digital values are stored instead of the digital values stored last and are, moreover, directed to the control and evaluating unit (2) for further evaluation with regard to amplitude and/or pulse width.

2. Method according to claim 1, characterised in that the mathematical/logical combination of the weighted, digital, sample values with the digital values stored and weighted for the previous pulse wave packet is effected by mean-value generation to give new digital values, the digital sample values obtained last in each case being multiplied by a first weighting factor and the already stored digital values being multiplied by a second weighting factor and the sum of both products being divided by the sum of the weighting factors.

3. Method according to claim 1 or 2, characterised in that each echo signal is sampled at temporally equidistant intervals.

4. Method according to one of the preceding claims, characterised in that the temporally equidistant sampling of each echo signal begins at the end of the transmission time for each pulse wave packet emitted by the ultrasonic proximity initiator (1).

5. Device for carrying out the method according to one of the claims 1 to 4, characterised by an intermediate processing unit (5) which is connected between the output (4) of an ultrasonic proximity initiator (1) and a control and evaluating device (2) and which has a sampling device for sampling the echo signal received by the proximity initiator, an analog-to-digital converter (6) for converting the sampled analog values of the echo signal into digital values, a data memory (8) for storing the digital values, a processor (7) and a program memory (9) for storing a program which is used to control a mathematical-logical combination in the processor (7), with the analog-to-digital-converter (6) being connected between the output (4) and the processor (7) which is electrically connected with the program memory (9), the data memory (8) and the control and evaluating unit (2).

## Revendications

1. Procédé pour supprimer des signaux parasites aléatoires lors de la mesure d'une distance, comportant un dispositif (3) constitué par un déclencheur de proximité à ultrasons (1) et par une unité de commande et d'évaluation (2), selon lequel le déclencheur de proximité à ultrasons (1) émet de façon répétée des impulsions ultrasonores de même largeur et reçoit des signaux d'échos qui leur sont associés (faisceau d'ondes impulsionnelles), qui sont évalués dans l'unité de commande et d'évaluation (2), et selon lequel des écarts aléatoires, indiquant la présence de signaux parasites, du signal d'écho par rapport à l'impulsion ultrasonore émise sont pris en compte pour la détermination de la distance, caractérisé par le fait que le signal d'écho analogique, qui apparaît à la sortie (4) du déclencheur de proximité à ultrasons (1) sous la forme d'un faisceau d'ondes impulsionnelles, subit un traitement préalable avant d'être envoyé à l'unité de commande et d'évaluation (2), par le fait que le signal d'écho est échantillonné à des instants déterminés, identiques pour chaque faisceau d'ondes impulsionnelles, que les valeurs analogiques échantillonnées sont alors converties en valeurs numériques, et que ces valeurs analogiques d'échantillonnage sont ensuite combinées mathématiquement/logiquement aux valeurs numériques déterminées pour des instants équivalents à partir des signaux d'échos précédents et mémorisées, pour former de nouvelles valeurs numériques, les valeurs numériques d'échantillonnage, qui se correspondent dans le temps, et les valeurs numériques mémorisées étant pondérées avec l'amplitude désirée et qu'ensuite des nouvelles valeurs numériques sont mémorisées à la place des valeurs numériques mémorisées en dernier lieu et sont en outre envoyées à l'unité de commande et d'évaluation (2) de manière que leur amplitude et/ou leur durée d'impulsion soit soumise à une évaluation ultérieure.

2. Procédé suivant la revendication 1, caractérisé par le fait que la combinaison mathématique/logique des valeurs numériques pondérées d'échantillonnage avec les valeurs numériques mémorisées pour le faisceau précédent d'ondes impulsionnelles et pondérées, pour former de nouvelles valeurs numériques, par le fait que les valeurs numériques d'échantillonnage, obtenues respectivement en dernier lieu, sont multipliées par un premier facteur de pondération et que les valeurs numériques déjà mémorisées sont multipliées par un second facteur de pondération et que la somme des deux produits est divisée par la somme des facteurs de pondération.

3. Procédé suivant la revendication 1 ou 2, caractérisé par le fait que chaque signal d'écho est échantillonné à des intervalles équidistants dans le temps.

4. Procédé suivant l'une des revendications précédentes, caractérisé par le fait que l'échantillonnage équidistant dans le temps, de chaque signal d'écho commence à la fin du temps d'émission pour chaque faisceau d'ondes impulsionnelles émis par le déclencheur de proximité à ultrasons (1).

5. Dispositif pour la mise en oeuvre du procédé suivant l'une des revendications 1 à 4, caractérisé par l'unité de traitement intermédiaire (5), qui est branchée entre la sortie (4) d'un déclencheur de proximité à ultrasons (1) et l'unité de commande et d'évaluation (2), qui possède un dispositif d'échantillonnage servant à échantillonner le signal d'écho reçu du déclencheur de proximité, un convertisseur analogique/numérique (6) pour convertir les valeurs analogiques échantillonnées du signal d'écho en des valeurs numériques, une mémoire de données (8) servant à mémoriser les valeurs numériques, un processeur (7) et une mémoire de programme (9) pour mémoriser un programme qui sert à commander une combinaison mathématico-logique dans le processeur (7), le convertisseur analogique/numérique (6) étant branché entre la sortie (4) et le processeur (7), qui est raccordé électriquement aussi bien à la mémoire de programme (9) qu'à la mémoire de données (8) et à l'unité de commande et d'évaluation (2).
